# EUROPEAN PATENT APPLICATION

(11) **EP 1 763 275 A1**
(43) Date of publication of application: **14.03.2007**
(21) Application number: 06018114.6
(22) Date of filing: 30.08.2006
(51) Int. Cl.: H04Q 7/38, H04L 12/28

(54) **Method of allocating downlink resources and method of receiving the allocated downlink resources in a communication system**

(30) Priority: 30.08.2005 KR 20050080034
(71) Applicant: Samsung Electronics Co., Ltd., Suwon-si, Gyeonggi-Do (KR)
(72) Inventor: Kwun, Jong-Hyung, Suwon-si, Gyeonggi-do (JP); Kim, Yung-Soo, Suwon-si, Gyeonggi-do (JP)
(74) Representative: Grünecker, Kinkeldey, Stockmair & Schwanhäusser Anwaltssozietät

(57) **Abstract**

A method of allocating resources to control information transmitted from a base station (BS) to a subscriber terminal in a downlink (DL) frame and the subscriber terminal for receiving the control information are provided. A preamble and a common control channel in a DL frame from a particular BS are allocated to a sub-carrier band that is different from that of a preamble and a common control channel in a DL frame from a neighbor BS, concurrently with the preamble and the common control channel of the neighbor BS. User-specific traffic in the DL frame of the particular BS is allocated to a total sub-carrier band concurrently with user-specific traffic of the neighbor BS.

## Description

### BACKGROUND OF THE INVENTION

### 1. Field of the Invention

The present invention relates generally to a method of allocating resources and a method of receiving the allocated resources in a communication system, and in particular, to a method of allocating resources for control information transmitted in a downlink (DL) frame from a Base Station (BS) to a subscriber terminal, and the subscriber terminal for receiving the allocated resources.

### 2. Description of the Related Art

Traditionally, a serving BS exchanges control information on a common control channel or a dedicated control channel with subscriber terminals within its cell area, in addition to performing data transmission in a cellular mobile communication system. The control information is delivered for various purposes including cell identification, synchronization acquisition, received signal level measurement, initial network access, paging information reception and information for allocating and maintaining a dedicated control channel at a subscriber terminal. Although an analog mobile communication system inserts control information used for a particular purpose in a predetermined part of a dedicated data channel at an early development stage, most systems configure dedicated or common radio resources to deliver control information according to its usage or nature.

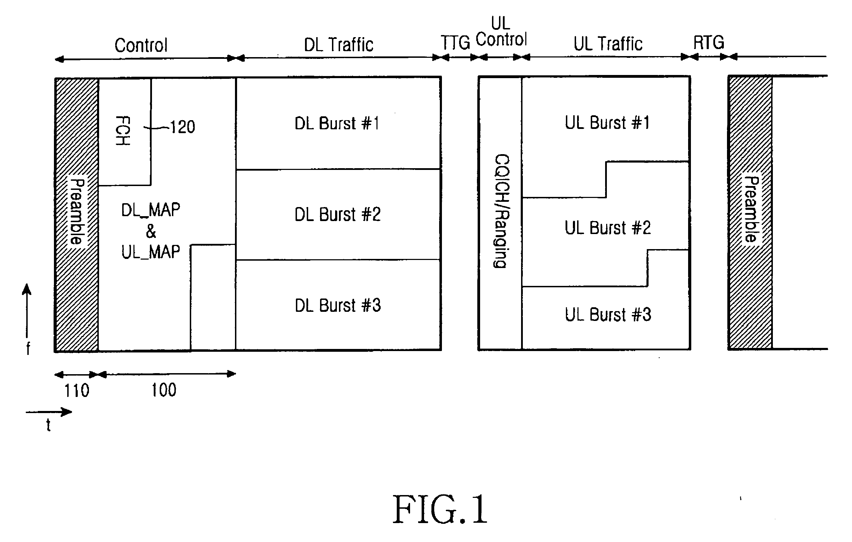

FIG. 1 illustrates a frame structure for an IEEE 802.16e system using Multi-Carrier Modulation (MCM) as a wideband multiple access scheme in order to increase bandwidth efficiency.

Referring to FIG. 1, the IEEE 802.16e system adopts a MAP scheme in which a predetermined area defined by minimum two-dimensional time-frequency radio resource allocation units is allocated to a particular subscriber terminal. A BS notifies all users within its cell area of areas allocated to a particular user for DL and uplink (UL) data transmission by DL_MAP and UL_MAP messages on a common control channel 100.

Therefore, the particular subscriber terminal first detects a preamble 110 having a relatively high signal level transmitted from the serving BS and acquires symbol timing synchronization, frame timing synchronization and frequency offset synchronization to the serving BS using the preamble 110. After initial channel estimation, the subscriber terminal then checks the positions of DL_MAP, UL_MAP, Downlink Channel Descriptor (DCD) and Uplink Channel Descriptor (UCD) in a corresponding frame by receiving a Frame Control Header (FCH) 120 following the preamble 110, and recovers control information.

The subscriber terminal now transmits/receives data referring to information indicating areas allocated to the subscriber terminal in the frame and how data is to be transmitted/received in the recovered control information. In this MAP scheme, the subscriber terminal cannot conduct normal communications with the serving BS until it finds out its own allocated areas in the frame and a transmission scheme by accurately receiving the common control channel 100.

In the wideband radio access system using this MAP scheme, however, if data transmission between BSs is synchronous, neighbor BSs transmit the preamble 110 and the common control channel 100 in the same time period. Thus, subscriber terminals, particularly when they are located at a cell boundary, receive relatively significant MAP information at a reduced success rate due to interference from signals from the neighbor BSs. Since the interference in the preamble 110 and the common control channel 100 from the neighbor BS signals cannot be solved simply by increasing the transmit power of the BS, repetition coding with a low coding rate (1/12 or 1/24) for the common control channel is under consideration in order to mitigate the influence of the interference from neighbor BSs. However, the low coding rate requires a huge amount of resources for transmission of the common control channel over the whole frame.

### SUMMARY OF THE INVENTION

An object of the present invention is to substantially solve at least the above problems and/or disadvantages and to provide at least the advantages below. Accordingly, the present invention provides a method of allocating control information in a DL frame in a communication system.

The present invention also provides a method of providing control information such that a subscriber terminal at a cell boundary can avoid the influence of neighbor BSs in a wideband multiple access communication system.

The present invention also provides a method of providing control information such that a subscriber terminal can directly refer to control information about neighbor BSs during a handoff in a wideband multiple access communication system.

According to the present invention, in a method of allocating resources to a downlink frame for sequentially delivering a preamble, a common control channel and user-specific traffic in a communication system, the preamble including synchronization information and cell identification information, the common control channel including common control information with an FCH, and the user-specific traffic including dedicated data for a subscriber terminal, a preamble and a common control channel in a downlink frame from a base station are allocated to a selected sub-carrier band with a selected frequency reuse factor, different from a sub-carrier band allocated to a preamble and a common control channel in a downlink frame from a neighbor base station at the same timing as the preamble and the common control channel from the neighbor base station. User-specific traffic in the downlink frame from the base station is allocated to a total sub-carrier band at the same timing as user-specific traffic in the downlink frame from the neighbor base station.

According to the present invention, in a method of allocating resources to a downlink frame for sequentially delivering a preamble, a common control channel and user-specific traffic in a communication system, the preamble including synchronization information and cell identification information, the common control channel including common control information with an FCH, and the user-specific traffic including dedicated data for a subscriber terminal, a preamble, a common control channel and user-specific traffic in a downlink frame from a base station are allocated to a total sub-carrier band at the same timing as a preamble, a common control channel and user-specific traffic from a neighbor base station. Symbols of the common control channel of the base station are repeated along a frequency axis as many times as a selected first spreading factor for the base station and spread with a selected spreading code having a frequency reuse factor for the base station.

According to the present invention, in a method of allocating resources to a downlink frame for sequentially delivering a preamble, a common control channel and user-specific traffic in a communication system, the preamble including synchronization information and cell identification information, the common control channel including common control information with an FCH, and the user-specific traffic including dedicated data for a subscriber terminal, a preamble, a common control channel and user-specific traffic in a downlink frame from a base station are allocated to a total sub-carrier band at the same timing as a preamble, a common control channel and user-specific traffic in a downlink frame from a neighbor base station. Symbols of the common control channel of the base station are repeated along a frequency axis as many times as a selected first spreading factor for the base station, spread with a selected orthogonal code for the base station, for code multiplexing, and scrambled with a selected scrambling code having a frequency reuse factor for the base station.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates a DL frame structure in a conventional IEEE 802.16e system;
FIG. 2 illustrates a DL frame structure to which resources are allocated according to the present invention;
FIG. 3 illustrates an interference mitigation effect in the case of a frequency reuse factor of 3 between cells;
FIG. 4 illustrates a DL frame structure to which resources are allocated according to the present invention;
FIG. 5 illustrates a DL frame structure to which resources are allocated according to the present invention;

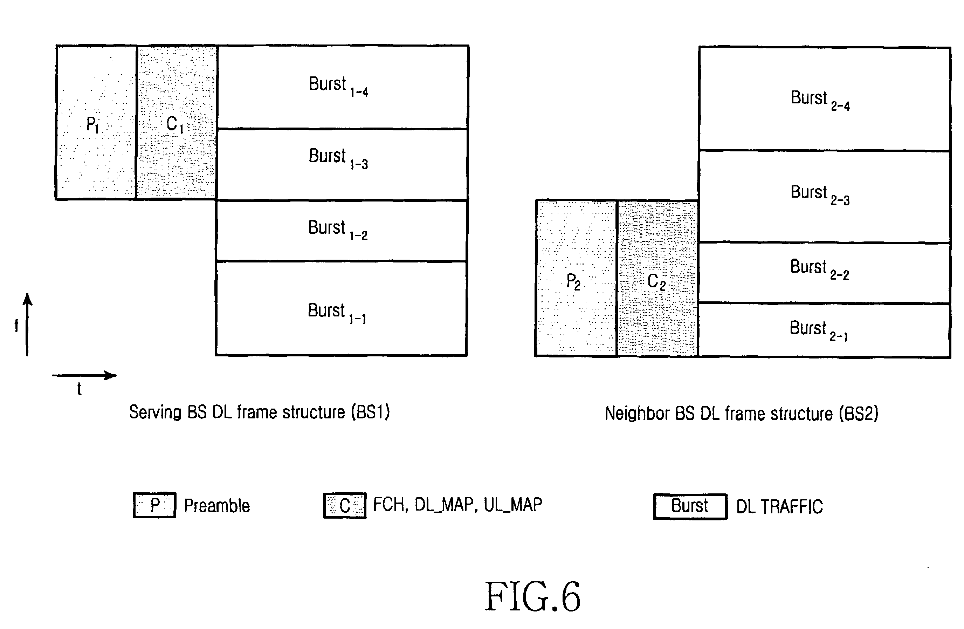

FIG. 6 illustrates a DL frame structure to which resources are allocated according to the present invention;
FIG. 7 illustrates a DL frame structure to which resources are allocated according to the present invention; and
FIG. 8 illustrates a DL frame structure to which resources are allocated according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail for the sake of clarity and conciseness.

In accordance with the present invention, a DL frame for a communication system includes a preamble, a common control channel and user-specific traffic. If data transmission is performed synchronously between BSs, a BS sends the preamble and the common control channel at the same timing as its neighbor BS, but with different radio resources. The preamble is used for initial symbol synchronization, frame synchronization, frequency offset synchronization and cell identification between the BS and a subscriber terminal. The common control channel delivers common control signals including FCH, DL_MAP, UL_MAP, UCD and DCD. The user-specific traffic has dedicated data signals for a user or users.

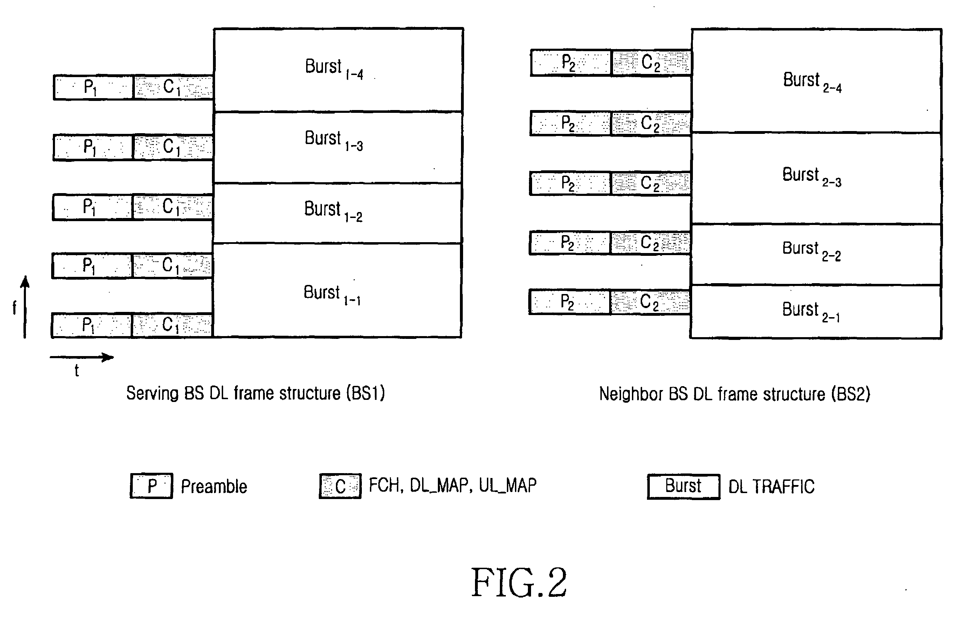

FIG. 2 illustrates a DL frame structure in which resources are allocated according to the present invention.

Referring to FIG. 2, BS1 transmits a preamble P₁ and a common control channel C₁ in a frame at the same timing as that of a neighbor BS, BS2, but at different frequencies from those of BS2.

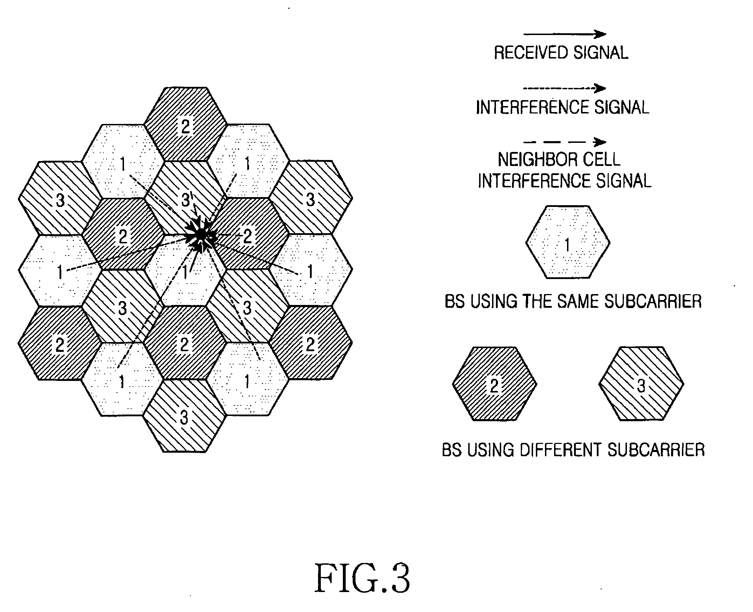

For example, BS1 and BS2 use a frequency reuse factor of 3 between P₁ and P₂, and C₁ and C₂, and a frequency reuse factor of 1 between user-specific traffics between Burst₁₋₁ to Burst₁₋₄ and Burst₂₋₁ to Burst₂₋₄. By using a frequency reuse factor of 1, all BSs use the same sub-carrier band. Since neighbor cell interference signals from the same sub-carrier band with the frequency reuse factor of 1 do not affect the channels with the frequency reuse factor of 3, as illustrated in FIG. 3, each BS allocates a preamble and a common control channel to different sub-carrier bands from those of a neighbor BS. Thus, a subscriber terminal detects only selected sub-carrier bands for a preamble and a common control channel, thereby significantly decreasing interference in the preamble and common control channel from neighbor BSs.

Meanwhile, if each BS allocates a common control channel in the same time period of a frame, the number of actually available symbols decreases by the ratio of the frequency reuse factor. Yet, considering neighbor cell interference in the common control channel which should be designed to be received stably for a user at a cell boundary, a coding method with a high coding rate can be used with respect to the same detection success rate in the present invention. Therefore, the amount of the common control signal transmittable in the same time period of a frame from each BS is increased, or a cell service area is increased with respect to the same amount of a common control signal in the present invention.

In the case where the preamble and the common control channel are transmitted at the same sub-carriers as illustrated in FIG. 2, the subscriber terminal can achieve accurate channel estimation information about a sub-carrier band using the preamble free of neighbor BS interference. Since the subscriber terminal detects the common control channel in a sub-carrier band whose channel estimation can be accurately achieved with neighbor interference reduced, the detection success rate of the common control channel increases.

In a cellular system where a serving BS transmits a signal of the DL frame structure illustrated in FIG. 2 to a subscriber terminal, the subscriber terminal can detect a preamble and a common control signal from a neighbor BS at a high success rate in the same manner as those of the serving BS are detected during a handoff. To be more specific, the subscriber terminal is provided with an apparatus for detecting P₂ and C₂ for BS2 in addition to an apparatus for detecting P₁ and C₁ for BS 1 so as to detect P₂ and C₂ without setting an additional search period. During detecting P₁ and C₁ for BS1 in an idle or active mode, the subscriber terminal may store a copy of a total signal received in the time period of P₁ and C₁ in a memory. When there is no traffic for the subscriber terminal as indicated by detected MAP information, the subscriber terminal can detect an intended sub-carrier signal from BS2 from the stored signal. In this manner, the subscriber terminal can detect C₂ with a single detector.

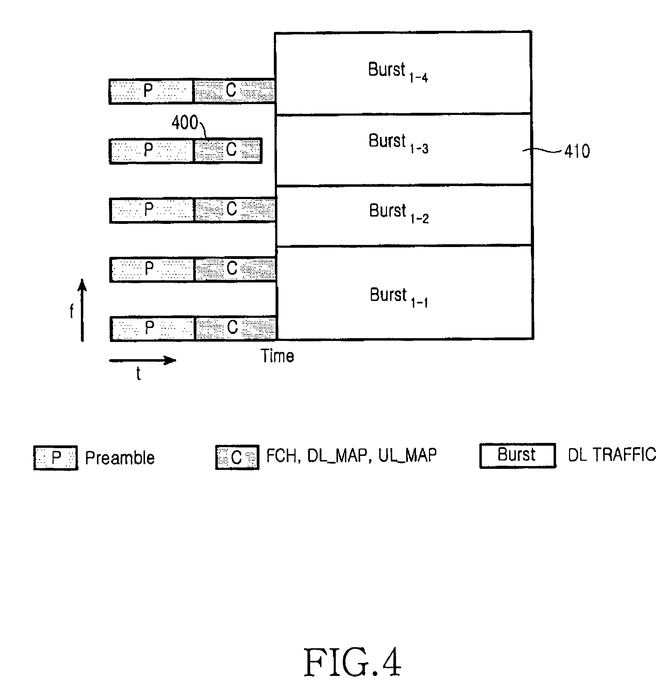

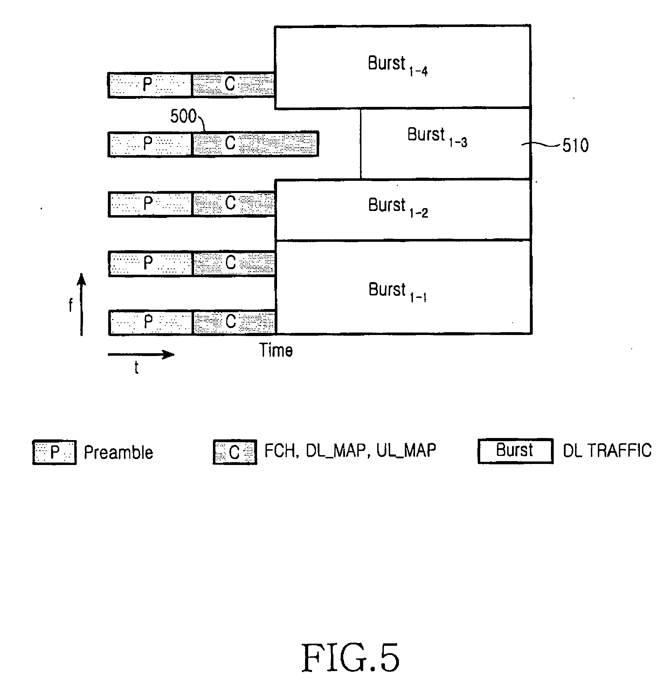

In the scheme of allocating the common control channel according to a frequency reuse factor, however, when common control channels from BSs significantly differ in the amount of data that they deliver, part of a common control channel delivering a relatively large amount of data from a BS may receive co-sub-carrier interference from user-specific traffic with a frequency reuse factor of 1 from a neighbor BS. To prevent the degradation of common control channel detection performance caused by an imbalance in data amount between common control channels from BSs, the common control channels can be allocated in the following three manners. First, if the data amount of a common control channel 400 from a BS is equal to or less than a threshold TH₁, the BS does not transmit user-specific traffic 410 until a Tₘᵢₙ symbol period (Active mode), despite the absence of common control information, in FIG. 4. Second, the data amount of a common control channel from each BS is limited to CCCHₘₐₓ so as to minimize the difference between the data amounts of common control channels from neighbor BSs (Passive mode). Third, as shown in FIG. 5, radio resources are allocated to user-specific traffic 510, starting from the last of a frame in time and sub-carriers are allocated to a common control channel 500 (Assisted Mode).

While BS 1 transmits P₁ and C₁ concurrently in the same frame as P₂ and C₂ from BS2, P₁ and C₁ can be transmitted on different sub-carriers from those of P₂ and C₂ according to a frequency reuse factor. In the illustrated case of FIG. 2, the frequency reuse factor is 2.

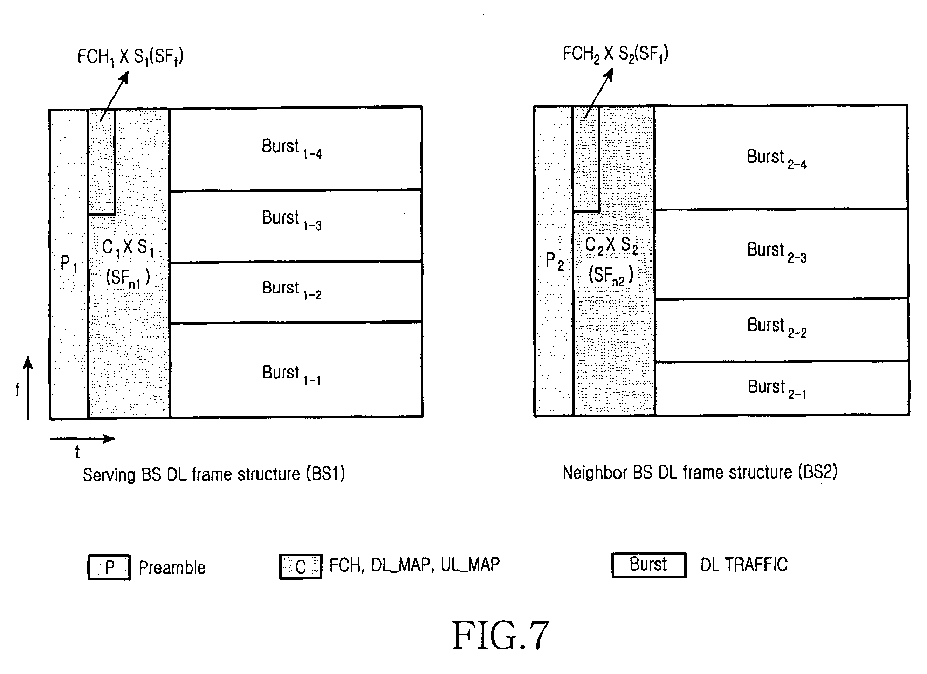

FIG. 7 illustrates a method of allocating resources to a common control channel with dynamic cell planning according to the present invention. While BS1 transmits P₁, C₁, and Burst₁₋₁ to Burst₁₋₄ concurrently in the same frame as BS2 across a total frequency band, it spreads common control channel symbols with a BS-specific spreading code S₁, prior to transmission.

To be more specific, BS1 repeats the common control channel symbols along the frequency axis as many times as a spreading factor of SFₙ₁ and spreads the repeated symbols with S₁. Upon receipt of the spread signal, a subscriber terminal de-spreads the received signal with S₁, thereby detecting C₁.

In the present invention, since the subscriber terminal of BS 1 achieves a signal processing gain from spreading, the reception success rate of the common control channel is increased. In addition, the subscriber terminal can refer to C₂ as well as C₁ without additional search period setting or BS1-assisted signaling during a handoff by de-spreading a received signal including overlapped common control channels from a plurality of BSs with the spreading code of BS2. In order to increase the detection success rate of C₂, the subscriber terminal can detect C₂ using a whole signal received during a common control channel period from which C₁ is appropriately eliminated.

In the frame structure of FIG. 7, existing code sequences with excellent correlation characteristics are used as the spreading codes S₁ and S₂ with which to spread C₁ and C₂, respectively. Similar to the manner illustrated in FIG. 3, the spreading codes are repeatedly used among neighbor cells according to a code reuse factor in a cellular structure. The number of available spreading codes in the system is equal to the ratio of the code reuse factor and determined by a preamble pattern. Therefore, the subscriber terminal can determine a spreading code used for the common control channel of the serving BS by detecting the preamble. FCH₁ and FCH₂ allocated to initial symbols on the common control channels provide information about the areas of the common control channels in frames within the cells of BS 1 and BS2, as illustrated in FIG. 7. FCH₁ and FCH₂ symbols are repeated along the frequency axis as many times as a spreading factor SF_{f} common to all BSs and then spread with S₁ and S₂, respectively.

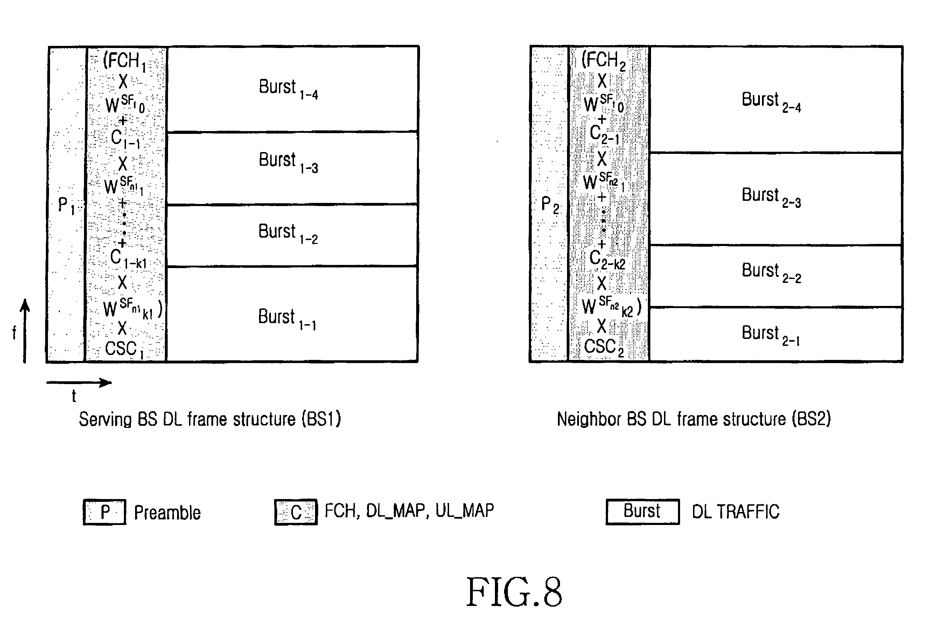

FIG. 8 illustrates a DL frame structure to which resources are allocated according to the present invention. The third embodiment is the same as the second embodiment in that BS1 and BS2 transmit P₁ and P₂ concurrently in the same frame across a total sub-carrier band, but differs from the second embodiment in that control signals on the common control channels are spread with orthogonal codes *W^{SF_{f}}₀* and *W^{SFₙ₁}₁* to *W^{SFₙ₁}ₖ₁,* and *W^{SF_{f}}₀* and *W^{SFₙ₂}₁* to *W^{SFₙ₂}ₖ₂,* respectively for code-multiplexing and then multiplied by cell-specific scrambling codes CSC₁ and CSC₂, respectively, prior to transmission.

FCH₁ and FCH₂ are repeated along the frequency axis as many times as the spreading factor SF_{f} common to all BSs, spread with the orthogonal code *W^{SF_{f}}₀,* and then multiplied by the scrambling codes CSC₁ and CSC₂, respectively. FCH₁ and FCH₂ define the periods of the common control channels and the spreading factors SFₙ₁ and SFₙ₂. Thus, they provide information about symbols allocated to the control signals and orthogonal codes used for the control signals. Control information other than FCH₁ and FCH₂ is repeated as many times as SFₙₗ or SFₙ₂ along the frequency axis, spread with *W^{SFₙ₁}ₖ₁* or *W^{SFₙ₂}ₖ₂* for code multiplexing and then scrambled with CSC₁ or CSC₂. Similar to the second embodiment, a scrambling code for a cell is determined by a preamble pattern and at least as many scrambling codes as the frequency reuse factor.

Therefore, since the subscriber terminal of BS1 receives C₁ by multiplying it by CSC₁ and then *W^{SFₙ₁}ₖ₁,* the reception success rate of C₁ increases due to a spreading gain. Also, the subscriber terminal can refer to C₂ as well as C₁ without additional search period setting or BS1-assisted signaling during a handoff by multiplying a received common control channel signal by CSC₂ and *W^{SFₙ₂}ₖ₂.* In order to increase the detection success rate of C₂, the subscriber terminal can detect C₂ using a whole signal received during a common control channel period, from which C₁ is appropriate eliminated.

As described above, the present invention advantageously enables users experiencing severe neighbor cell interference at a cell boundary to more efficiently communicate by accurately receiving common control channels.

Furthermore, since a subscriber terminal can receive a common control channel from a neighbor cell during a handoff without additional search period setting or serving BS-assisted data exchange, the time required for the handoff is reduced and a handoff apparatus can be flexibly designed.

While the invention has been shown and described with reference to certain preferred embodiments thereof, it will be understood by those skilled in the art that various changes in form and details may be made therein without departing from the spirit and scope of the invention as defined by the appended claims.

## Claims

1. A method of allocating resources to a downlink frame for sequentially delivering a preamble, a common control channel and user-specific traffic in a communication system, the preamble including synchronization information and cell identification information, the common control channel including common control information with a frame control header (FCH), and the user-specific traffic including dedicated data for a subscriber terminal, the method comprising the steps of:
allocating, with a selected frequency reuse factor, a preamble and a common control channel in a downlink frame, from a base station to a selected sub-carrier band that is different from a sub-carrier band which is concurrently allocated to a preamble and a common control channel in a downlink frame from a neighbor base station; and
allocating user-specific traffic in the downlink frame from the base station to a total sub-carrier band concurrently with user-specific traffic in the downlink frame from the neighbor base station.

2. The method of claim 1, further comprising allocating none of the user-specific traffic until a selected symbol period in the downlink frame, despite the absence of common control information, when the amount of control information on the common control channel of the base station is equal to or less than a threshold.

3. The method of claim 1, wherein an amount of the common control information on the common control channel of the base station is not to exceed a symbol period to which the user-specific traffic is to be allocated in the downlink frame.

4. The method of claim 1, wherein the user-specific traffic of the base station is allocated along a time axis in the downlink frame, beginning at an end of a symbol period, and the common control channel of the base station is allocated to a sub-carrier band with priority over the user-specific traffic.

5. A method of allocating resources to a downlink frame for sequentially delivering a preamble, a common control channel and user-specific traffic in a communication system, the preamble including synchronization information and cell identification information, the common control channel including common control information with a frame control header (FCH), and the user-specific traffic including dedicated data for a subscriber terminal, the method comprising the steps of:
allocating a preamble, a common control channel and user-specific traffic in a downlink frame from a base station to a total sub-carrier band concurrently with an allocation of a preamble, a common control channel and user-specific traffic from a neighbor base station; and
repeating symbols of the common control channel of the base station along a frequency axis as many times as a first spreading factor for the base station and spreading the repeated symbols with a spreading code having a frequency reuse factor for the base station.

6. The method of claim 5, wherein an FCH included in the common control channel provides information about an area allocated to the common control frame in the downlink frame of the base station and information about the first spreading factor, and the FCH is repeated as many times as a second spreading factor common to all base stations in a first symbol period of the common control channel, is spread with the spreading code for the base station and is transmitted.

7. A method of allocating resources to a downlink frame for sequentially delivering a preamble, a common control channel and user-specific traffic in a wideband multiple access communication system, the preamble including synchronization information and cell identification information, the common control channel including common control information with a frame control header (FCH), and the user-specific traffic including dedicated data for a subscriber terminal, the method comprising the steps of:
allocating a preamble, a common control channel and user-specific traffic in a downlink frame from a base station to a total sub-carrier band concurrently with an allocation of a preamble, a common control channel and user-specific traffic in a downlink frame from a neighbor base station; and
repeating symbols of the common control channel of the base station along a frequency axis as many times as a first spreading factor for the base station, spreading the repeated symbols with an orthogonal code for the base station, for code multiplexing, and scrambling the spread symbols with a scrambling code having a frequency reuse factor for the base station.

8. The method of claim 7, wherein an FCH included in the common control channel provides information about a period of the common control frame in the downlink frame of the base station, symbols allocated to all control information transmitted on the common control channel, the orthogonal code and the first spreading factor, and the FCH is repeated as many times as a second spreading factor common to all base stations in a first symbol period of the common control channel, is spread with the orthogonal code for the base station, is scrambled with the scrambling code and is transmitted.

9. A method of receiving a common control channel in a subscriber terminal in a communication system where a first base station and a second base station transmit common control channels concurrently in downlink frames, each for sequentially delivering a preamble, a common control channel and user-specific traffic in a communication system, the preamble including synchronization information and cell identification information, the common control channel including common control information with a frame control header (FCH), and the user-specific traffic including dedicated data for a subscriber terminal, the method comprising the steps of:
detecting information about a spreading code for the first base station from a preamble received from the first base station;
detecting information about a spreading factor for the first base station from an FCH received from the first base station using the spreading code information of the first base station;
detecting common control information transmitted from the first base station using the spreading factor information of the first base station;
detecting information about a spreading code for the second base station from a preamble received from the second base station;
detecting information about a spreading factor for the second base station from an FCH received from the second base station using the spreading code information of the second base station; and
detecting common control information transmitted from the second base station using the spreading factor information of the second base station.

10. The method of claim 9, wherein the common control information of the first base station and the common control information of the second base station are detected using different devices.

11. The method of claim 9, wherein the subscriber terminal detects the common control information of a serving base station that is one of the first and second base stations, and detects the common control information of a neighbor base station which is the other of the first and second base stations, without traffic allocated to the subscriber terminal according to MAP information included in the common control information of the serving base station.

12. A method of receiving a common control channel in a subscriber terminal in a communication system where a first base station and a second base station concurrently transmit common control channels in downlink frames, each for sequentially delivering a preamble, a common control channel and user-specific traffic in a communication system, the preamble including synchronization information and cell identification information, the common control channel including common control information with a frame control header (FCH), and the user-specific traffic including dedicated data for a subscriber terminal, the method comprising the steps of:
detecting information about a scrambling code for the first base station from a preamble received from the first base station;
detecting information about a spreading factor for the first base station and information about an orthogonal code for the first base station from an FCH received from the first base station using the scrambling code information of the first base station;
detecting common control information transmitted from the first base station using the spreading factor information and the orthogonal code information of the first base station;
detecting information about a scrambling code for the second base station from a preamble received from the second base station;
detecting information about a spreading factor for the second base station and information about an orthogonal code for the second base station from an FCH received from the second base station using the scrambling code information of the second base station; and
detecting common control information transmitted from the second base station using the spreading factor information and the orthogonal code information of the second base station.

13. The method of claim 12, wherein the common control information of the first base station and the common control information of the second base station are detected using different devices.

14. The method of claim 12, wherein the subscriber terminal detects the common control information of a serving base station that is one of the first and second base stations, and detects the common control information of a neighbor base station which is the other of the first and second base stations, without traffic allocated to the subscriber terminal according to MAP information included in the common control information of the serving base station.
